# EUROPEAN PATENT APPLICATION

(11) **EP 4 803 343 A1**
(43) Date of publication of application: **09.09.2026**
(21) Application number: 26161613.0
(22) Date of filing: 02.03.2026
(51) Int. Cl.: B60K 35/25, B60Q 9/00, B60W 50/16, G06F 3/01, B60N 2/90, B60K 35/26, B60N 2/64, B60N 2/70, G08B 6/00

(54) **METHOD AND SYSTEM FOR A HAPTIC FEEDBACK SYSTEM WITH TACTILE LOUDSPEAKERS**

(30) Priority: 03.03.2025 US 202563766279 P
(71) Applicant: Harman Becker Automotive Systems, Inc., Novi, MI 48377 (US)
(72) Inventor: STAFFORD, Dylan Michael, Novi, MI, 48377 (US); DiPASSIO III, Joseph James, Novi, MI, 48377 (US); FORNARI, Tessa Victoria, Novi, MI, 48377 (US)
(74) Representative: Westphal, Mussgnug & Partner, Patentanwälte mbB

(57) **Abstract**

A system and method are provided herein for dynamic haptic feedback in vehicles. Speakers are integrated into vehicle seats to provide tactile feedback in synchronization with internal sound and external sound synthesis perceptible to an occupant to enhance awareness of vehicle dynamics.

## Description

### CROSS REFERENCE TO RELATED APPLICATION

The present application claims priority to U.S. Provisional Application No. 63/766,279, entitled METHOD AND SYSTEM FOR A HAPTIC FEEDBACK SYSTEM WITH TACTILE LOUDSPEAKERS, and filed on March 3, 2025. The entire content of the above application is hereby incorporated by reference for all purposes.

### FIELD

The present disclosure relates to a system and a method for haptic feedback systems, and more specifically, haptic feedback systems wherein speakers are integrated into vehicle seats to provide tactile feedback in synchronization with internal sound and external sound synthesis technologies.

### BACKGROUND

Traditional sources of engine noise and vibration as well as other sensor cues for vehicle dynamics are diminished or absent in electric vehicles. As such, modern electric vehicles employ sound synthesis technologies that create artificial sounds internal to and external to the vehicle to mimic engine noise, enhance driving feedback, and satisfy regulations that affect pedestrians. However, the sound synthesis technologies tend to rely on auditory feedback and do not provide tactile sensations that drivers subconsciously rely on to perceive acceleration, deceleration, and change in vehicle dynamics. Previous haptic feedback systems rely on simple vibrator motors used for alerts, such as seatbelt reminders, lane departure warnings, etc., or incidental bass vibrations from traditional audio systems. Such previous haptic feedback systems are not able to deliver dynamic, real-time tactile feedback that is reflective of nuanced behavior of vehicle dynamics.

### SUMMARY

In various embodiments, the issues described above, which are identified by the inventors herein, may be addressed by a dynamic haptic feedback system that supplements existing sound synthesis technologies by introducing additional synchronized sensory feedback. More specifically, existing sound synthesis technologies are supplemented with synchronized haptic vibrations. In this way, the dynamic haptic feedback system addresses the sensory gap identified by the inventors herein by providing an immersive feedback mechanism that dynamically reflects vehicle performance, enhances driver engagement, and enhances driver situational awareness in electrical vehicles wherein traditional engine cues are absent.

In one example, the dynamic haptic feedback system integrates speakers within vehicle seats to deliver tactile sensations synchronized with internal sound synthesis and external sound synthesis systems. In this way, traditional auditory feedback is supplemented by physical vibrations that correspond to vehicle dynamics, including acceleration, deceleration, gear shifts, and road conditions.

It should be understood that the summary above is provided to introduce in simplified form a selection of concepts that are further described in the detailed description. It is not meant to identify key or essential features of the claimed subject matter, the scope of which is defined uniquely by the claims that follow the detailed description. Furthermore, the claimed subject matter is not limited to implementations that solve any disadvantages noted above or in any part of this disclosure.

### BRIEF DESCRIPTION OF THE DRAWINGS

The disclosure may be understood from reading the following description of non-limiting embodiments, with reference to the attached drawings, wherein below:
FIG. 1 shows a vehicle system including one or more speakers, according to one or more embodiments of the present disclosure;
FIG. 2 shows a block diagram of a dynamic haptic feedback system of a vehicle configured according to one or more embodiments of the present disclosure;
FIG. 3 shows an example process for generating tactile feedback using the dynamic haptic feedback system;
FIG. 4 shows a flowchart of a method for generating tactile feedback using the dynamic haptic feedback system; and
FIG. 5 shows a flowchart of a method for synthesizing haptic signals.

### DETAILED DESCRIPTION

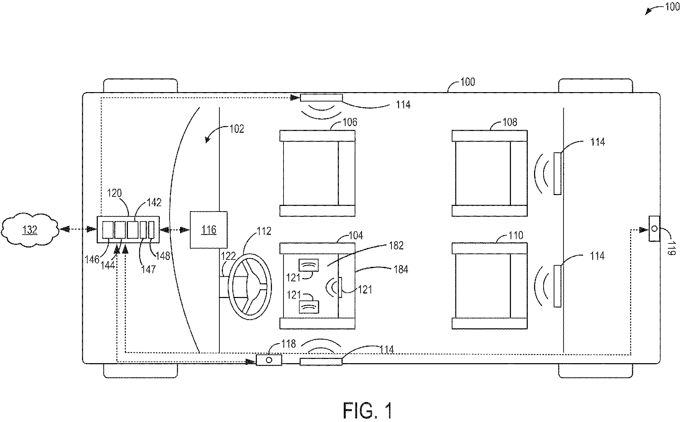

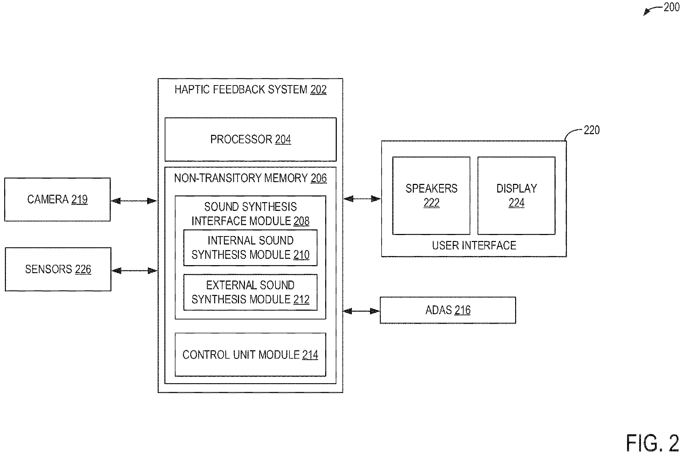

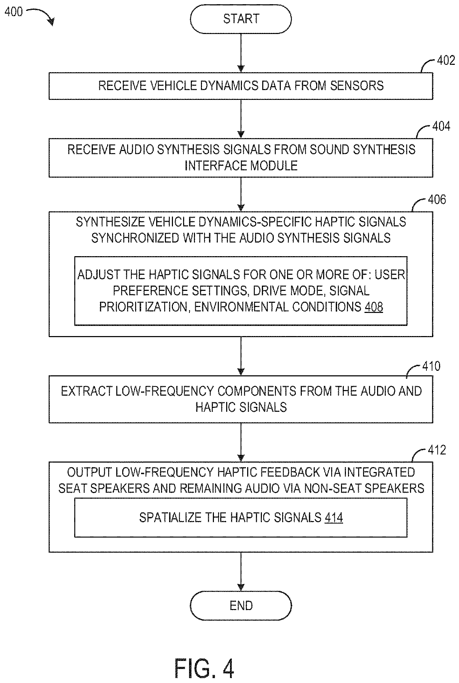

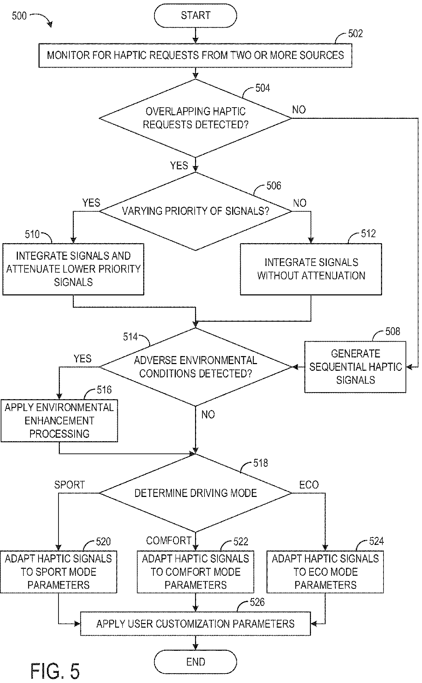

The following description relates to a system and method for a haptic feedback system for a vehicle. The vehicle may comprise seat-integrated speakers designed to transmit both sound and vibration intentionally tuned for tactile feedback through a seat structure. An example of the vehicle is illustrated schematically in FIG. 1, and FIG. 2 shows a block diagram of an example haptic feedback system. The haptic feedback system includes an interface of the vehicle with the sound synthesis module, allowing dynamic synchronization of haptic feedback with synthetic engine sounds, external pedestrian warning sounds, and other auditory cues. A control unit may process vehicle dynamics data to modulate audio and haptic output in real time, ensuring coherent and immersive feedback. The vehicle dynamics data may include throttle input, speed, road conditions, and the like. Examples of methods for generating tactile feedback using the dynamic haptic feedback system are provided as flowcharts in FIGS. 4 and 5.

Compared to previous methods of providing haptic feedback in vehicles, the methods disclosed herein may have several advantages. For example, previously used steering wheel haptics may not be practical in vehicles that enable a self-driving mode where a driver may remove their hands from the steering wheel, because the driver may not notice the feedback when not contacting the steering wheel. In contrast, the driver may be able to observe haptic feedback output by the integrated seat speakers described herein even in a self-driving vehicle. Therefore, it may be less likely that the haptic feedback emitted from the integrated seat speakers goes unnoticed compared to haptic devices in other locations. Further, vibration transducers not adapted for auditory output may be restricted to narrowband outputs, and may be difficult or impossible to synchronize with corresponding audio signals. Further still, the integrated seat speakers may have a small form factor in comparison to motors and other mechanical vibration generators. Thus, using the seat speakers as described herein may increase driver awareness, expand frequency ranges, synchronize with the audio more effectively, and increase spatial efficiency.

Turning now to the figures, FIG. 1 schematically shows an exemplary vehicle 100. The vehicle 100 includes a dashboard 102, a driver seat 104, a first passenger seat 106, a second passenger seat 108, and a third passenger seat 110. In other examples, the vehicle 100 may include more or fewer passenger seats. The driver seat 104 and the first passenger seat 106 are located in a front of the vehicle, proximate to the dashboard 102, and therefore may be referred to as front seats. The second passenger seat 108 and the third passenger seat 110 are located at a rear of the vehicle and may be referred to as back (or rear) seats.

Additionally, the vehicle 100 includes a plurality of integrated speakers 114, which may be arranged around a periphery of the vehicle 100. In some embodiments, the integrated speakers 114 are electronically coupled to an electronic control system of the vehicle, such as to a computing device 120, via a wired connection. In other embodiments, the integrated speakers 114 may wirelessly communicate with the computing device 120. The vehicle 200 further includes one or more integrated seat speakers 121 that may be arranged in a seat cushion 182 and a backrest 184 of the driver seat 104 to optimize tactile feedback distribution. In some examples, one or more of the passenger seats 106, 108, 110 may include integrated seat speakers in respective seat cushions and backrests similar to the integrated seat speakers 121 of the driver seat 104.

The vehicle 100 includes a steering wheel 112 and a steering column 122, through which the driver may input steering commands for the vehicle 100. The vehicle 100 further includes a camera 118. The camera 118 may be one camera of a plurality of cameras. In the embodiment shown in FIG. 1, the camera 118 is positioned to the side of the driver seat 104, which may aid in monitoring the driver in profile. However, in other examples, the camera 118 may be positioned in other locations in the vehicle, such as on the steering column 122, directly in front of the driver seat 104. Additionally or alternatively, the camera 118 may be positioned to the side of the passenger seats 106, 108, and 110 or directly in front of the passenger seats 106, 108, and 110.

Additionally, in the embodiment shown in FIG. 1, a second camera 119 is positioned on the exterior of the back end of the vehicle 100, which may aid in monitoring the position of the vehicle 100 in a lane and/or monitor the position of the vehicle 100 relative to other vehicles and/or the surrounding environment, as some examples. In other examples, the camera 119 may be positioned in other locations in the vehicle, such as the exterior of the front end of the vehicle 100 or the sides of the vehicle 100.

The computing device 120 may receive inputs via a user interface 116 as well as output information to the user interface 116. The user interface 116 may be included in a digital cockpit, for example, and may include a display and one or more input devices. The one or more input devices may include one or more touchscreens, knobs, dials, hard buttons, and/or soft buttons for receiving user input from a vehicle occupant. In this way, the user interface 116 may allow manual adjustment of haptic feedback intensity, frequency range, and responsiveness to vehicle dynamics.

The computing device 120 includes a processor 142 configured to execute machine readable instructions stored in a memory 144. The processor 142 may be single core or multi-core, and the programs executed by processor 142 may be configured for parallel or distributed processing. In some embodiments, the processor 142 is a microcontroller. The processor 142 may optionally include individual components that are distributed throughout two or more devices, which may be remotely located and/or configured for coordinated processing. In some embodiments, one or more aspects of the processor 142 may be virtualized and executed by remotely-accessible networked computing devices configured in a cloud computing configuration. For example, the computing device 120 may be communicatively coupled with a wireless network 132 via a transceiver 146, and the computing device 120 may communicate with the networked computing devices via the wireless network 132.

The computing device 120 may include a haptic feedback system 147. The haptic feedback system 147 may be coupled to the plurality of integrated seat speakers 121, which may be optimized to transmit low frequency vibrations (e.g., 20-200 Hz) based on vehicle dynamics. The haptic feedback system 147 is described herein further with respect to FIG. 2. The computing device 120 may include an Advanced Driver Assistance System (ADAS) 148, which may provide assistance to the driver. In particular, the haptic feedback system 147 may be communicatively coupled to the ADAS 148 or integrated therein. As such, ADAS alerts provided to the driver may include or be based on output from the haptic feedback system 147.

Additionally or alternatively, the computing device 120 may directly communicate with the networked computing devices via short-range communication protocols, such as Bluetooth^{®}. In some embodiments, the computing device 120 may include other electronic components capable of carrying out processing functions, such as a digital signal processor, a field-programmable gate array (FPGA), or a graphic board. In some embodiments, the processor 142 may include multiple electronic components capable of carrying out processing functions. For example, the processor 142 may include two or more electronic components selected from a plurality of possible electronic components, including a central processor, a digital signal processor, a field-programmable gate array, and a graphics board. In still further embodiments, the processor 142 may be configured as a graphical processing unit (GPU), including parallel computing architecture and parallel processing capabilities.

Further, the memory 144 may include any non-transitory tangible computer readable medium in which programming instructions are stored. As used herein, the term "tangible computer readable medium" is expressly defined to include any type of computer readable storage. The example methods described herein may be stored as coded instructions (e.g., computer readable instructions) on a non-transitory computer readable medium such as a flash memory, a read-only memory (ROM), a random-access memory (RAM), a cache, or any other storage media in which information is stored for any duration (e.g. for extended period time periods, permanently, brief instances, for temporarily buffering, and/or for caching of the information).

Computer memory of computer readable storage mediums as referenced herein may include volatile and non-volatile, or removable and non-removable, media for a storage of electronically formatted information, such as computer readable program instructions or modules of computer readable program instructions, data, etc. that may be stand-alone or as part of a computing device. Examples of computer memory may include any other medium which can be used to store the desired electronic format of information and which can be accessed by the processor or processors or at least a portion of a computing device. In various embodiments, the memory 144 may include an SD memory card, an internal and/or external hard disk, USB memory device, or a similar modular memory.

Further still, in some examples, the computing device 120 may include a plurality of sub-systems or modules tasks with performing specific functions related to operating the haptic feedback system 147 based on vehicle dynamics. As used herein, the terms "system," "unit," or "module" may include a hardware and/or software system that operates to perform one or more functions. For example, a module, unit, or system may include a computer processor, controller, or other logic-based device that performs operations based on instructions stored on a tangible and non-transitory computer readable storage medium, such as a computer memory. Alternatively, a module, unit, or system may include a hard-wired device that performs operations based on hard-wired logic of the device. Various modules or units described herein may represent the hardware that operates based on software or hardwired instructions, the software that directs hardware to perform the operations, or a combination thereof.

FIG. 2 shows a block diagram of a computing system 200 wherein a haptic feedback system 202 is integrated. The haptic feedback system 202 may be a non-limiting example of the haptic feedback system 147 of FIG. 1. The haptic feedback system 202 may be communicatively coupled to a camera 219 that monitors external surroundings of a vehicle, in accordance with an embodiment. The camera 219 may provide image data to the haptic feedback system 202 and/or an ADAS 216. In some embodiments, the haptic feedback system 202 may be communicatively coupled to the ADAS 216 and/or integrated into the ADAS 216. The camera 219 may be similar to, or the same as, the camera 119 of FIG. 1. The computing system 200 may be a non-limiting version of the computing device 120 of FIG. 1.

The haptic feedback system 202 includes a processor 204 configured to execute machine readable instructions stored in non-transitory memory 206. Processor 204 may be single core or multi-core, and the programs executed thereon may be configured for parallel or distributed processing. In some embodiments, the processor 204 may optionally include individual components that are distributed throughout two or more devices, which may be remotely located and/or configured for coordinated processing. In some embodiments, one or more aspects of the processor 204 may be virtualized and executed by remotely-accessible networked computing devices configured in a cloud computing configuration.

Non-transitory memory 206 includes a sound synthesis interface module 208 and a control unit module 214. The sound synthesis interface module 208 includes an internal sound synthesis module 210 and an external sound synthesis module 212. The internal sound synthesis module 210 generates artificial sounds and outputs the artificial sounds inside the vehicle based on the dynamic vehicle data. The external sound synthesis module 212 generates artificial sounds and outputs the artificial sounds outside the vehicle based on the vehicle dynamics data. For example, the artificial sounds generated by the internal sound synthesis module 210 may be emitted via speakers 222, the integrated speakers 114 of FIG. 1, and/or the integrated seat speakers 121 of FIG. 1. In this way, the haptic feedback system 202 is able to generate artificial sounds that simulate engine noise, acceleration feedback of the vehicle, external pedestrian alerts and/or warning sounds, and other auditory cues.

The control unit module 214 receives input data from an electronic control system of the vehicle. In particular, the control unit module 214 receives input data from various sensors 226 indicating vehicle conditions such as throttle position, engine and/or motor load, speed, braking force, road conditions, and ADAS alerts received from the ADAS 216. The control unit module 214 dynamically adjusts the audio signals directed to the one or more integrated seat speakers 121 based on the received input data. In this way, the control unit module 214 may modulate audio and haptic output in real time to ensure coherent and immersive feedback by the haptic feedback system 202.

The vehicle may include a user interface 220, which may include one or more speakers 222 and a display 224. The one or more speakers 222 may include the plurality of integrated speakers 114 around the periphery of the interior of the vehicle and the one or more integrated seat speakers 121 embedded within the seat cushion and backrest of the driver seat. The one or more integrated seat speakers 121 may function as both audio output devices and tactile transducers that provide localized vibrations that vary in intensity and frequency based on the driving conditions.

In this way, the control unit module 214 may use the input data to dynamically adjust the audio signals directed to the one or more integrated seat speakers 121. In particular, lower frequency components are used to produce haptic feedback via the one or more integrated seat speakers 121 and the higher frequency components are directed to traditional in-cabin speakers, such as the plurality of integrated speakers 114 described herein. Accordingly, the driver may hear and may feel physical vibrations that indicate changes in the vehicle dynamics, which may enhance situational awareness of the driver and the driver's overall experience. The driver may manually control the haptic feedback system via the user interface 220 of the vehicle (e.g. via the infotainment system). For example, the driver may customize the intensity, frequency range, and responsiveness of the haptic feedback.

As described above, the haptic feedback system 202 may be integrated with the ADAS 216 to provide localized, directional tactile clues for various features of the ADAS via the one or more integrated seat speakers 121. For example, the haptic feedback system 202 may output strong, targeted vibrations across the seat to alert the driver to a collision warning. Additionally, the haptic feedback system 202 may output subtle vibrations on the side of the seat corresponding to the lane drift direction during lane departure. Further, the haptic feedback system 202 may output haptic pulses to alert the driver when vehicles are detected in blind spots during blind spot monitoring.

In another example, the haptic feedback system 202 may output vibrations that intensify based on throttle input during dynamic acceleration feedback to simulate the tactile sensation of engine RPM in ICE vehicles. The haptic feedback system 202 may output subtle haptic pulses during braking to enhance the perception of deceleration forces when providing braking feedback. The haptic feedback system 202 may also output haptic cues that mimic the sensation perceived by the driver during mechanical shifts when providing gear shift simulation. The haptic feedback system 202 may output variable vibrations based on the road texture to simulate the sensation perceived by the driver when driving on different surfaces when providing road surface feedback. The haptic feedback system 202 may output high priority tactile warnings to the drivers when providing emergency alerts to the driver using the ADAS.

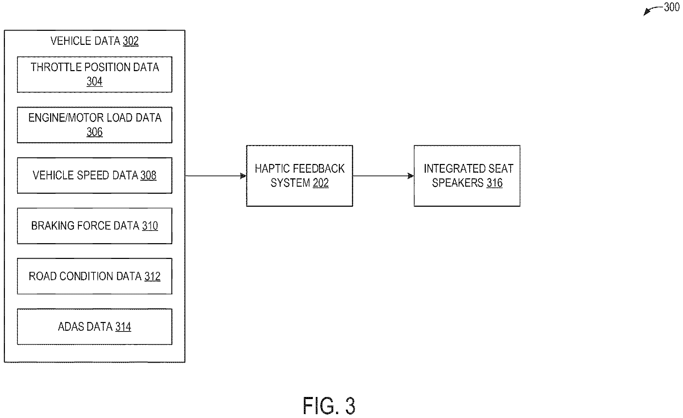

FIG. 3 illustrates an example process 300 for using a haptic feedback system 202 to generate tactile cues that are output to one or more integrated seat speakers. Vehicle data 302 may be entered as input to the haptic feedback system 202 to generate tactile cues that are output to the one or more integrated seat speakers. The vehicle data 302 may include throttle position data 304, engine/motor load data 306, vehicle speed data 308, braking force data 310, road condition data 312, and ADAS data 314.

The haptic feedback system 202 includes methods for delivering feedback profiles based on the selected driving mode of the respective vehicle. For example, the feedback profile and the corresponding tactile cues output by the haptic feedback system 202 may differ based on whether the vehicle is operating in the comfort mode, the sport mode, or the eco mode. In this way, the feedback profile for a vehicle operating in the sport mode includes tactile cues with more pronounced haptic sensations. Further, the feedback profile and the corresponding tactile cues output by the haptic feedback system 202 may also differ based on the environmental conditions wherein the vehicle is operating. In particular, during adverse driving conditions, traction related vibrations may be increased on slippery roads to increase driver awareness.

Throttle position sensors, acceleration pedal position sensors, and motor torque may be used to characterize high acceleration conditions where feedback is higher. In contrast, feedback is attenuated under light acceleration conditions. A speedometer and wheel speed sensors may be used to characterize speed conditions. Engine dynamics may better characterize speed conditions at lower speeds whereas road texture and aeroacoustics feedback may better characterize speed conditions at higher speeds. Brake pressure sensors, regenerative braking data, and G-force may be leveraged to provide different tactile effects. More specifically, increasing brake pressure or enabling regenerative braking may provide these different tactile effects. Tactile feedback may be tailored to include or preclude poor road conditions based on data obtained from suspension sensors, accelerometers, and/or cameras.

Dynamic driving conditions may be characterized based on steering angle, yaw, lateral acceleration and other components of steering dynamics. In this way, haptic feedback may be enhanced during driving conditions, such as tight cornering. The haptic feedback may include various levels of intensities based on drive mode selection of the drive mode selector. Electronic sound synthesis (ESS) feedback tuning may also be considered when providing tactile feedback. In particular, the audio that results from the ESS tuning may be used as a direct influence of the frequency and strength of the vibration. For example, if the tuning for the ESS has a lot of low frequency content, a greater strength of vibration may be employed by utilizing a low-pass filter on the ESS audio. The filtered ESS audio may be used as input to the vibration system. In another example, a relationship between the power of the tuning in certain driving scenarios and the resultant power of the vibration may be developed. Localized pulses with varying degrees of intensity based on the severity of the ADAS alert, which may include lane departure warning alerts, alerts from collision detection, and alerts from blind spot monitoring.

Turning to FIG. 4, a flowchart of a method 400 is shown for dynamic haptic feedback generation in integrated seat speakers such as the integrated seat speakers 121 of FIG. 1. Method 400 and the rest of the methods herein may be stored as instructions on a non-volatile computer-readable medium that are executable by one or more processors. For example, the method 400 may be executed by the haptic feedback system 147 of FIG. 1 or the haptic feedback system 202 of FIG. 2.

At 402, method 400 includes receiving vehicle dynamics data from sensors. For example, the controller may monitor and receive real-time data from the sensors via a vehicle CAN bus including one or more of: throttle position, brake pressure, vehicle speed, steering angle, motor torque, and regenerative braking force. The controller may receive the data continuously or intermittently. The vehicle dynamics data may be sampled at a sufficient rate to capture transient driving events, such as at least 100 Hz. In some examples, incoming data streams received by the controller may be buffered in circular memory buffers to enable temporal analysis. In such examples, patterns of fluctuations may be utilized in haptic feedback generation in addition to the individual data samples, as described further below.

At 404, method 400 includes receiving audio synthesis signals from a sound synthesis interface module, such as the sound synthesis interface module 208 of FIG. 2. For example, the received audio synthesis signals may include audio signals from an internal Electronic Sound Synthesis (ESS) system generating simulated engine sounds and other audio, such as the internal sound synthesis module 210 of FIG. 2. Additionally, or alternatively, the received audio synthesis signals may include external pedestrian warning audio signals from an Acoustic Vehicle Alerting System (AVAS), such as the external sound synthesis module 212 of FIG. 2. The audio synthesis signals may be integrated with the haptic signals generated at a subsequent step of the method. For example, low-frequency components of the audio synthesis signals may be combined with the haptic signals and output via the integrated seat speakers, as described further below.

At 406, method 400 includes synthesizing vehicle dynamics-specific haptic signals synchronized with the audio synthesis signals. For example, the vehicle dynamics-specific haptic signals may be generated based on the vehicle dynamics data received at 402. As such, the vehicle dynamics-specific haptic signals may vary in pattern and/or intensity according to one or more of: vehicle speed, acceleration, braking force, gearshift timing, and road texture.

For example, to capture vehicle speed and acceleration in the haptic feedback, the throttle position (e.g., 0%-100%) may map to an amplitude of the haptic signals, such as in an exponential relationship. That is the controller may input the throttle position to a lookup table or equation stored in the memory that outputs a corresponding amplitude. Additionally, or alternatively, the frequency of the haptic signal corresponding to the vehicle speed and acceleration may increase with increasing vehicle speed. For example, the frequency may increase proportionally (e.g., linearly) with the vehicle speed.

For example, to capture braking force in the haptic feedback, a pulsed vibration pattern may be generated. The pulsed vibration pattern may include an intermittent signal with brief pauses between sequential pulses. For example, an intensity of the haptic signal corresponding to the braking force may increase with increasing brake pressure. Additionally, or alternatively, a pulse rate of the pulsed vibration pattern may increase with decreasing vehicle speed, such that the pulse rate reaches a maximum as the vehicle approaches a stop. The braking feedback may cease when the vehicle speed is approximately zero, such that while the vehicle is resting, such as at a stoplight, the braking force is not included in the haptic feedback.

For example, to represent a gearshift via the haptic feedback, a single pulse may be generated in response to sensor feedback indicating a gearshift (e.g., clutch position sensor) or in response to the controller generating a control command to a clutch for a gearshift. The single pulse may have a short duration, such as 100-500 milliseconds. A frequency of the single pulse may be the same throughout the duration of the pulse, or may sweep across a range of frequencies. In this way, the haptic feedback may simulate a mechanical shift feel.

For example, for road texture simulation in the haptic feedback, a signal component may be added with an amplitude corresponding to a road surface coefficient indicated via sensor signals.

At 408, which may be included in 406, method 400 includes adjusting the haptic signals for one or more of: user preference settings, drive mode, ADAS alert (e.g., from the ADAS 216), signal prioritization, and environmental conditions. For example, the frequency and/or amplitude of the haptic signals may be adjusted based on one or more of: user preference settings, drive mode, ADAS alert, signal prioritization, and environmental conditions. Adjusting the vehicle dynamics-specific haptic signals is described further below in reference to FIG. 5.

At 410, method 400 includes extracting low-frequency components from the haptic and audio signals. The low-frequency components may include signal components having a frequency of less than a threshold frequency. Additionally or alternatively, the low-frequency components may include signal components having a frequency within an optimal range of the integrated seat speakers. For example, the low-frequency components may be in a range of 20 Hz to 200 Hz. For example, extracting the low-frequency components may include applying digital bypass band filtering to the haptic and audio signals. Bounds of the digital bypass band filtering may be 20 Hz and 200 Hz, in one example. In this way, the low-frequency components may be extracted from the haptic and audio signals while preserving phase relationships to maintain temporal synchronization with the original synthesized signals.

At 412, method 400 includes outputting low-frequency haptic feedback via integrated seat speakers. For example, the controller may send the low-frequency components of the haptic signals extracted at 410 to the integrated seat speakers, such as integrated seat speakers 121 of FIG. 1, which may output the corresponding sound and vibrations. The remainder of the haptic and audio signals (e.g., high-frequency components, such as signals with frequency over 200 Hz) of the haptic and audio signals may be routed to other speakers that are not integrated with the seats, such as speakers 114 of FIG. 1. In this way, the audio synthesis and haptic signals may be distributed between integrated seat speakers and speakers of the vehicle located elsewhere by frequency range.

Outputting the haptic feedback at 412 may include 414. At 414, method 400 includes spatializing the haptic signals. Spatializing the haptic signals may include distributing the individual haptic signals between the integrated seat speakers. For example, the integrated seat speakers of a given seat, such as one of the driver seat 104, first passenger seat 106, second passenger seat 108, and third passenger seat 110, may include one or more speakers in a cushion and one or more speakers in a backrest, and the haptic signals may be separated between the cushion and the backrest. Additionally, or alternatively, within the cushion there may be a left cushion speaker located closer to the left hand side of an occupant sitting in the seat and a right cushion speaker located closer to the right hand side of the occupant. Similarly, within the backrest, there may be a left backrest speaker located closer to the left hand side of the occupant and a right backrest speaker located closer to the right hand side of the occupant.

For symmetric events, such as acceleration and braking, the signals may be distributed evenly to each of the integrated seat speakers, and for asymmetric events, such as lane departure and blind spot detection, amplitude panning may be applied to the signals to emphasize a specific direction. Including multiple speakers in various locations may enable directional alerts corresponding to the asymmetric event. For example, a lane departure alert notifying the driver of the vehicle crossing over a road lane boundary may be accompanied by emphasized haptic feedback on the side of the vehicle that is crossing the boundary. For instance if the vehicle is veering to the right of the driver, the right cushion speaker and the right backrest speaker may receive a higher amplitude signal than the left cushion speaker and the left backrest speaker. For example, the amplitude of the sounds may be 80-100% in the right speakers and 0-20% in the left speakers. In another example, for vertical events such as a road bump, the cushion speakers may be emphasized over the backrest speakers. For example, the amplitude of the sounds may be 80-100% in the cushion speakers and 0-20% in the backrest speakers. In this way, the distribution of sounds and vibrations among the speakers may be customized to the specific event or vehicle condition.

Outputting the haptic feedback at 412 may, in some examples, further include applying time-alignment delays, such as 5 milliseconds or less, to compensate for position differences of the integrated seat speakers and maintain synchronicity. Additionally, outputting the haptic feedback at 412 may further include converting the synthesized digital signals to analog signals that cause the speakers to emit the sounds with the commanded frequency and amplitude. The analog signals are routed to the designated speakers (e.g., left cushion, right cushion, left backrest, right backrest) for spatialized haptic feedback.

In this way, the method 400 delivers haptic feedback to the integrated seat speakers while maintaining synchronization with auditory ESS and AVAS output.

Turning to FIG. 5, a method 500 is shown as a flowchart for synthesizing haptic signals and adjusting the haptic signals to various conditions. Method 500 may be performed as part of method 500 or independently thereof.

At 502, method 500 includes monitoring for haptic requests from two or more sources, such as vehicle dynamics and ADAS alerts. Monitoring vehicle dynamics for haptic requests may include monitoring for changes in vehicle conditions, such as vehicle speed, acceleration, braking force, and so on, as described above. Monitoring for ADAS alerts may include monitoring ADAS status flags, such as adaptive cruise control active, lane keeping assist engaged, and collision warning state. Monitoring for haptic requests may further include tracking environmental sensor signals such as signals from an external temperature sensor, windshield wiper status for rain detection, and traction control activation state.

A haptic request may be generated in response to any of the monitored sources. For example, a haptic request may be generated in response to applying a force to brakes of the vehicle. As another example, a haptic request may be generated in response to the acceleration exceeding a threshold acceleration. As another example, a haptic request may be generated in response to any of the ADAS status flags. Each haptic request may be timestamped with microsecond precision for temporal synchronization. A temporal overlap between two or more haptic requests may be identified when the two or more haptic requests occur within a threshold duration. The threshold duration may be approximately 500 milliseconds, as one example.

At 504, method 500 includes determining whether two or more overlapping haptic requests are detected. For example, if a temporal overlap between two or more haptic requests is identified at 502, it may be determined that there are two or more overlapping haptic requests. If it is determined that there are not overlapping haptic requests (NO at 504), method 500 proceeds to 508. At 508, method 500 includes generating sequential haptic signals. For example, the sequential haptic signals may be based on vehicle dynamics as described with reference to 406 of FIG. 4.

Additionally or alternatively, the sequential haptic signals may be based on ADAS data. For example, ADAS alerts may be integrated into the haptic feedback. Integrating the ADAS alerts with the haptic signals may include identifying an alert type, such as a collision warning, lane departure, blind spot detection, or the like, and generating a haptic pattern based on the alert type. For example, in response to a collision warning alert from the ADAS system, signals commanding a rapid pulse chain, such as pulses at a rate of 10-15 Hz, at a high intensity (e.g., 90-100% of the maximum capacity) may be generated and directed to all of the integrated seat speakers. For example, in response to a lane departure alert from the ADAS system, haptic signals commanding a sustained vibration (e.g., continuous over 2-3 seconds) may be generated and directed to the integrated seat speakers on the departure side (e.g., left or right). As another example, in response to a blind spot alert from the ADAS system, haptic signals commanding a short double-pulse (e.g., 200 milliseconds each with a 100 millisecond gap in between) may be generated and directed to the integrated seat speakers on the corresponding side (e.g., left or right) where an object external to the vehicle is detected. Because ADAS alerts may be higher priority than vehicle dynamics-based feedback, ADAS-related haptic signals may cause the controller to suppress other haptic requests until the ADAS-related haptic feedback is complete. After the ADAS alert is complete, normal haptic feedback may be restored, allowing vehicle-dynamics based haptic feedback and other haptic feedback. In some examples, a decay period of 1-2 seconds may delay resuming the normal haptic feedback to prevent overlap between the ADAS alert based haptic feedback and any other haptic signals.

In response to overlapping haptic requests (YES at 504), method 500 proceeds to 506. At 506, method 500 includes determining whether priority levels of the two or more overlapping haptic requests vary or are the same as each other. The priority levels of the haptic requests may be determined based on the trigger of the haptic request. For example, haptic requests in response to ADAS alerts may be assigned a higher priority than at least some haptic requests in response to vehicle dynamics. As another example, haptic requests in response to vehicle dynamics may be assigned a higher priority than haptic requests in response to environmental conditions.

If there are varying priority levels of the two or more overlapping haptic requests (YES at 506), method 500 proceeds to 510. At 510, method 500 includes integrating two or more haptic signals and attenuating lower priority signals. Integrating two or more haptic signals may include combining the signals in synchronization with the timestamps of the corresponding haptic requests. For example, in an instance where the overlapping haptic requests comprise an ADAS alert haptic request and a vehicle dynamics haptic request, the haptic signal corresponding to the vehicle dynamics may be the lower priority signal. For example, the lower priority signals may be attenuated by 20-40 dB to decrease an intensity of the haptic feedback, making haptic feedback corresponding to higher priority signals more distinguishable and noticeable in comparison. In this way, the controller may resolve competing haptic requests by adjusting intensities (e.g., amplitudes) to reflect the priority of the haptic feedback.

If the priority levels of the overlapping haptic requests are the same (NO at 506), method 500 proceeds to 512. At 512, method 500 includes integrating the two or more haptic signals without attenuation. Thus, the intensities of the haptic signals having equivalent priorities may be unchanged and identical to an instance where the same haptic signals occur without temporal overlap. In some examples, a crossfading algorithm may be applied with a transition time (e.g., 100-300 milliseconds) between haptic signals with temporal overlap. Additionally or alternatively, an amplitude restriction may be enforced to prevent saturation in the case that constructive interaction increases a combined amplitude. For example, if the combined amplitude of the overlapping haptic signals is over a threshold amplitude, the amplitude may be reduced to the threshold amplitude.

After 508, 510, or 512, method 500 proceeds to 514. At 514, method 500 includes determining whether adverse environmental conditions are detected. Adverse environmental conditions may be detected based on sensor input from the environmental sensors such as an external temperature sensor, windshield wiper status for rain detection, and traction control activation state for road texture. Adverse environmental conditions may be determined if the external temperature is below a threshold temperature. For example the threshold temperature may be 0 C, below which icy conditions may be present on roads. Additionally or alternatively, adverse environmental conditions (e.g., rain) may be determined if the windshield wipers are active. Additionally or alternatively, adverse environmental conditions may be determined if the traction control is active.

If adverse environmental conditions are detected (YES at 514), method 500 proceeds to 516. At 516, method 500 includes applying environmental enhancement processing to the haptic signals. For example, applying environmental enhancement processing to the haptic signals may include increasing haptic feedback intensity, such as by 10-30%, to enhance driver awareness. If the detected adverse environmental conditions relate to road texture, a stochastic component (e.g., 5-15 Hz) may be added to the haptic signals to simulate road surface irregularity.

After 516, or 514 if adverse environmental conditions are not detected (NO at 514), method 500 proceeds to 518. At 518, method 500 includes determining a drive mode. The drive mode may be user-selected or automatically selected by the controller in response to vehicle conditions. For example, the current drive mode selection may be read from the memory of the controller.

If the drive mode is a sport mode (SPORT at 518), method 500 proceeds to 520. At 520, method 500 incudes adapting the haptic signals to sport mode parameters. For example, adapting the haptic signals to the sport mode parameters may include emphasizing certain frequency bands, such as mid-bass (e.g., 80-120 Hz) and upper-bass (e.g., 120-200 Hz) by applying gain boost. The gain boost may be 3-6 dB, for example. Additionally or alternatively, the overall haptic intensity may be increased to 80-100% of a maximum capability of the integrated seat speakers. Additionally or alternatively, additional harmonic content may be synthesized (e.g., at 2 or 3 times fundamental frequency) to enrich tactile texture of the output.

If the drive mode is a comfort mode (COMFORT at 518), method 500 proceeds to 522. At 522, method 500 incudes adapting the haptic signals to comfort mode parameters. For example, adapting the haptic signals to the comfort mode parameters may include emphasizing certain frequency bands, such as sub-bass (e.g., 20-40 Hz) and low-bass (e.g., 40-80 Hz), for smoother more gentle tactile feedback. Additionally or alternatively, the overall haptic intensity may be reduced to 40-60% of the maximum capability of the integrated seat speakers. Additionally or alternatively, a smoothing filter, such as a low-pass filter with 10-20 Hz cutoff, may be applied to reduce sharp transients in the haptic feedback.

If the drive mode is an eco mode (e.g., economy mode for increased energy efficiency) (ECO at 518), method 500 proceeds to 524. At 524, method 500 incudes adapting the haptic signals to eco mode parameters. For example, adapting the haptic signals to the eco mode parameters may include minimizing the haptic feedback intensity to reduce power consumption. For example, the amplitude of the haptic signals may be reduced to 20-40% of a maximum output capacity. Additionally or alternatively, a focus on energy efficiency related feedback may be applied by emphasizing regenerative braking events with a higher pulse rate, enhanced intensity compared to any overlapping signals, or other signal augmentation. Additionally or alternatively, in examples where the integrated seat speakers operate at a higher efficiency when outputting relatively lower frequency audio, high-frequency content (e.g., above 100 Hz) may be suppressed to reduce power draw to the integrated seat speakers. Additionally or alternatively, the haptic signals may be segmented into discrete pulses or intermittent signals rather than continuous output to reduce power consumption.

After adjusting for the selected mode at 520, 522, or 524, method 500 proceeds to 526. At 526, method 500 includes applying user customization parameters. For example, an intensity scaling factor may be retrieved from user settings stored in the memory. The intensity scaling factor may be on a scale of 0% to 100%, where 0% silences the haptic feedback and 100% is a maximum output of the haptic feedback. The intensity scaling factor may be used to scale the amplitude of the haptic signals to the preference of the user. User customization parameters may in some examples further include preferences to enable and disable specific feedback types, such as to suppress vehicle dynamics related haptic feedback while allowing ADAS alerts via haptic feedback. The user customization parameters may in some examples be configurable based on the selected mode. For example, the user may prefer that vehicle dynamics related haptic feedback is enabled in a first mode and disabled in a second mode, or has a higher intensity in the first mode than the second mode. Thus, the user preferences may include for each selectable mode an intensity scaling factor and/or enabled/disabled statuses for various feedback types. The user may enter and adjust the user customization parameters via a user interface, such as user interface 116 of FIG. 1.

After synthesizing the haptic signals using method 500, the haptic signals may be combined with audio synthesis signals and converted from digital to analog signals which may be directed to the corresponding speakers throughout the vehicle. Because the haptic signals are emitted via audio, the haptic feedback may be synchronized with the audio synthesis signals without additional synchronization steps that may be demanded when using mechanical vibration devices for haptic feedback.

In this way, the systems and methods herein may provide audio-based haptic feedback via integrated seat-speakers in synchronization with audio feedback from internal and external sound synthesis modules in order to enhance driver awareness. The multi-source priority arbitration may dynamically balance competing haptic demands to integrate the overlapping haptic signals in a way that avoids feedback blending in a way that becomes indistinguishable. For example, prioritizing haptic signals may ensure more urgent signals, such as ADAS alerts, are not masked by less urgent signals, such as vehicle dynamics. Additionally, tailoring the synthesized haptic feedback to the selected mode by altering signal processing algorithms based on driving context may provide more intuitive and effective feedback, as well as a greater capacity for user preference customization. Moreover, spatialized haptic feedback conveys directional information (e.g., lane departures, blind spot detection, etc.) without demanding visual identification, reducing a cognitive demand on the driver. By separating frequency bands of the signals into haptic and audio components sent respectively to integrated seat speakers and other non-seat speakers (e.g., in-cabin speakers and/or external speakers), the synthesized signals may be more effectively perceived by the driver. Further, the frequency bands corresponding to the various speakers may be tailored to the optimized frequency ranges of the speakers such that energy efficiency may be increased.

The disclosure also provides support for a haptic feedback system for a vehicle, comprising: one or more speakers integrated into a vehicle seat, a vehicle interface with internal and external sound synthesis modules configured to generate audio signals based on vehicle dynamics, and a control unit including instructions stored on non-volatile memory, the instructions being executable to process audio signals and vehicle dynamics data, directing low-frequency components to the seat-integrated speakers to generate tactile feedback perceptible to an occupant, wherein the tactile feedback supplements auditory feedback to enhance perception of vehicle dynamics. In a first example of the system, the control unit adjusts an amplitude and frequency of tactile feedback in response to changes in acceleration, braking, and steering inputs. In a second example of the system, optionally including the first example, the seat-integrated speakers are positioned in both a seat cushion and a backrest of the vehicle seat to optimize tactile feedback distribution. In a third example of the system, optionally including one or both of the first and second examples, the haptic feedback simulates specific driving events, including gearshifts, road texture changes, and regenerative braking forces. In a fourth example of the system, optionally including one or more or each of the first through third examples, the control unit synchronizes tactile feedback with external pedestrian warning sounds to enhance driver awareness. In a fifth example of the system, optionally including one or more or each of the first through fourth examples, the control unit adjusts haptic feedback based on environmental conditions, such as road surface changes or loss of traction. In a sixth example of the system, optionally including one or more or each of the first through fifth examples, the haptic feedback system integrates with Advanced Driver Assistance Systems (ADAS) to provide tactile alerts for collision warnings, lane departure signals, and blind spot monitoring. In a seventh example of the system, optionally including one or more or each of the first through sixth examples, the system further comprises: a user interface allowing manual adjustment of haptic feedback intensity, frequency range, and responsiveness to vehicle dynamics.

The disclosure also provides support for a method for generating dynamic haptic feedback via integrated seat speakers in a vehicle seat, comprising: receiving vehicle dynamics data from sensors of the vehicle, synthesizing haptic signals based on the vehicle dynamics data and synchronized with audio synthesis signals from internal and external sound synthesis modules, extracting low-frequency components from the haptic signals and the audio synthesis signals, outputting haptic feedback corresponding to the low-frequency components via the integrated seat speakers. In a first example of the method, the vehicle dynamics data includes one or more of: throttle position data, motor load data, vehicle speed data, braking force data, road condition data, and ADAS data. In a second example of the method, optionally including the first example, the method further includes adjusting the haptic signals based on one or more of: user preference settings, drive mode, signal prioritization, and environmental conditions. In a third example of the method, optionally including one or both of the first and second examples, adjusting the haptic signals based on user preference settings includes applying an intensity scaling factor to the haptic signals. In a fourth example of the method, optionally including one or more or each of the first through third examples, adjusting the haptic signals based on the signal prioritization includes: identifying two or more overlapping haptic signals, and integrating the overlapping haptic signals by attenuating a lower priority signal of the overlapping haptic signals. In a fifth example of the method, optionally including one or more or each of the first through fourth examples, adjusting the haptic signals based on the drive mode includes emphasizing certain frequency bands according to the drive mode, and increasing or decreasing an intensity of the haptic feedback according to the drive mode.

The disclosure also provides support for a vehicle, comprising: a plurality of sensors configured to detect vehicle dynamics including one or more of: throttle position, motor load, vehicle speed, acceleration, braking force, road conditions, and aDaS alerts, a driver seat including integrated seat speakers, a controller including instructions stored in non-transitory memory thereof and executable to: synthesize haptic signals based on the vehicle dynamics indicated by sensor input from the sensors, output the haptic signals via the integrated seat speakers. In a first example of the system, the integrated seat speakers are located in a seat cushion and a backrest of the driver seat. In a second example of the system, optionally including the first example, the integrated seat speakers include at least two speakers, where at least one speaker is proximate to a left side of the driver seat and at least one speaker is proximate to a right side of the driver seat. In a third example of the system, optionally including one or both of the first and second examples, the instructions are further executable to: prior to outputting the haptic signals via the integrated seat speakers, integrate the haptic signals with audio synthesis signals from internal and external sound synthesis modules by extracting low-frequency components using a low-pass filter, and concurrently with outputting the haptic signals and the low-frequency components via the integrated seat speakers, output remaining audio synthesis signals via in-cabin speakers. In a fourth example of the system, optionally including one or more or each of the first through third examples, the instructions are further executable to spatialize the haptic signals by distributing the haptic signals among the integrated seat speakers. In a fifth example of the system, optionally including one or more or each of the first through fourth examples, distributing the haptic signals among the integrated seat speakers includes: for directional alerts, applying amplitude panning by increasing amplitude for one or more and less than all of the integrated seat speakers, and for symmetric events, distributing signals equally to all of the integrated seat speakers.

The description of embodiments has been presented for purposes of illustration and description. Suitable modifications and variations to the embodiments may be performed in light of the above description or may be acquired from practicing the methods. For example, unless otherwise noted, one or more of the described methods may be performed by a suitable device and/or combination of devices, such as the embodiments described above with respect to FIGS. 3-5. The methods may be performed by executing stored instructions with one or more logic devices (e.g., processors) in combination with one or more hardware elements, such as storage devices, memory, hardware network interfaces/antennas, switches, clock circuits, and so on. The described methods and associated actions may also be performed in various orders in addition to the order described in this application, in parallel, and/or simultaneously. The described systems are exemplary in nature, and may include additional elements and/or omit elements. The subject matter of the present disclosure includes all novel and non-obvious combinations and sub-combinations of the various systems and configurations, and other features, functions, and/or properties disclosed.

As used in this application, an element or step recited in the singular and proceeded with the word "a" or "an" should be understood as not excluding plural of said elements or steps, unless such exclusion is stated. Furthermore, references to "one embodiment" or "one example" of the present disclosure are not intended to be interpreted as excluding the existence of additional embodiments that also incorporate the recited features. The terms "first," "second," "third," and so on are used merely as labels and are not intended to impose numerical requirements or a particular positional order on their objects unless explicitly stated to the contrary.

The following claims particularly point out subject matter from the above disclosure that is regarded as novel and non-obvious. These claims may refer to "an" element or "a first" element or the equivalent thereof. Such claims should be understood to include incorporation of one or more such elements, neither requiring nor excluding two or more such elements. Other combinations and sub-combinations of the disclosed features, functions, elements, and/or properties may be claimed through amendment of the present claims or through presentation of new claims in this or a related application. Such claims, whether broader, narrower, equal, or different in scope to the original claims, also are regarded as included within the subject matter of the present disclosure.

## Claims

1. A haptic feedback system for a vehicle, comprising:
one or more speakers integrated into a vehicle seat;
a vehicle interface with internal and external sound synthesis modules configured to generate audio signals based on vehicle dynamics; and
a control unit including instructions stored on non-volatile memory, the instructions being executable to process audio signals and vehicle dynamics data, directing low-frequency components to the seat-integrated speakers to generate tactile feedback perceptible to an occupant, wherein the tactile feedback supplements auditory feedback to enhance perception of vehicle dynamics.

2. The haptic feedback system for the vehicle of claim 1, wherein
the control unit adjusts an amplitude and frequency of tactile feedback in response to changes in acceleration, braking, and steering inputs,
the control unit synchronizes tactile feedback with external pedestrian warning sounds to enhance driver awareness, and/or
the control unit adjusts haptic feedback based on environmental conditions, such as road surface changes or loss of traction.

3. The haptic feedback system for the vehicle of claim 1 or 2, wherein the seat-integrated speakers are positioned in both a seat cushion and a backrest of the vehicle seat to optimize tactile feedback distribution.

4. The haptic feedback system for the vehicle of any of claims 1 to 3, wherein the haptic feedback simulates specific driving events, including gearshifts, road texture changes, and regenerative braking forces.

5. The haptic feedback system for the vehicle of any of claims 1 to 4, wherein the haptic feedback system integrates with Advanced Driver Assistance Systems (ADAS) to provide tactile alerts for collision warnings, lane departure signals, and blind spot monitoring.

6. The haptic feedback system for the vehicle of any of claims 1 to 5, further comprising a user interface allowing manual adjustment of haptic feedback intensity, frequency range, and responsiveness to vehicle dynamics.

7. A method for generating dynamic haptic feedback via integrated seat speakers in a vehicle seat, comprising:
receiving vehicle dynamics data from sensors of the vehicle;
synthesizing haptic signals based on the vehicle dynamics data and synchronized with audio synthesis signals from internal and external sound synthesis modules;
extracting low-frequency components from the haptic signals and the audio synthesis signals;
outputting haptic feedback corresponding to the low-frequency components via the integrated seat speakers.

8. The method of claim 7, wherein the vehicle dynamics data includes one or more of: throttle position data, motor load data, vehicle speed data, braking force data, road condition data, and ADAS data.

9. The method of claim 7 or 8, wherein the method further includes adjusting the haptic signals based on one or more of: user preference settings, drive mode, signal prioritization, and environmental conditions.

10. The method of claim 9, wherein
the method further includes adjusting the haptic signals based on user preference settings, wherein adjusting the haptic signals based on user preference settings includes applying an intensity scaling factor to the haptic signals, or
the method further includes adjusting the haptic signals based on signal prioritization, wherein adjusting the haptic signals based on the signal prioritization includes identifying two or more overlapping haptic signals, and integrating the overlapping haptic signals by attenuating a lower priority signal of the overlapping haptic signals, or
the method further includes adjusting the haptic signals based on drive mode, wherein adjusting the haptic signals based on the drive mode includes emphasizing certain frequency bands according to the drive mode, and increasing or decreasing an intensity of the haptic feedback according to the drive mode.

11. A vehicle, comprising:
a plurality of sensors configured to detect vehicle dynamics including one or more of: throttle position, motor load, vehicle speed, acceleration, braking force, road conditions, and ADAS alerts;
a driver seat including integrated seat speakers;
a controller including instructions stored in non-transitory memory thereof and executable to:
synthesize haptic signals based on the vehicle dynamics indicated by sensor input from the sensors;
output the haptic signals via the integrated seat speakers.

12. The vehicle of claim 11, wherein
the integrated seat speakers are located in a seat cushion and a backrest of the driver seat, and/or
the integrated seat speakers include at least two speakers, where at least one speaker is proximate to a left side of the driver seat and at least one speaker is proximate to a right side of the driver seat.

13. The vehicle of claim 11 or 12, wherein the instructions are further executable to:
prior to outputting the haptic signals via the integrated seat speakers, integrate the haptic signals with audio synthesis signals from internal and external sound synthesis modules by extracting low-frequency components using a low-pass filter; and
concurrently with outputting the haptic signals and the low-frequency components via the integrated seat speakers, output remaining audio synthesis signals via in-cabin speakers.

14. The vehicle of any of claims 11 to 13, wherein the instructions are further executable to spatialize the haptic signals by distributing the haptic signals among the integrated seat speakers.

15. The vehicle of claim 14, wherein distributing the haptic signals among the integrated seat speakers includes:
for directional alerts, applying amplitude panning by increasing amplitude for one or more and less than all of the integrated seat speakers; and
for symmetric events, distributing signals equally to all of the integrated seat speakers.
